Europäisches Patentamt

European Patent Office

Office européen des brevets

(19)

(11) **EP 0 996 588 B1**

(12) **EUROPEAN PATENT SPECIFICATION**

(45) Date of publication and mention
of the grant of the patent:
**14.11.2001 Bulletin 2001/46**

(51) Int Cl.$^7$: **C01B 33/148**, C01B 33/143,
A23L 1/059, A23L 2/82,
C12H 1/02, D21H 17/68,
B22C 1/18

(21) Application number: **98939563.7**

(22) Date of filing: **30.06.1998**

(86) International application number:
**PCT/EP98/03983**

(87) International publication number:
**WO 99/01377 (14.01.1999 Gazette 1999/02)**

(54) **PROCESS TO OBTAIN A HIGH-CONCENTRATION COLLOIDAL SILICA SUSPENSION AND PRODUCT THUS OBTAINED**

VERFAHREN ZUR HERSTELLUNG EINER HOCHKONZENTRIERTEN KOLLOIDALEN KIESELSÄURE-SUSPENSION UND DES DABEI HERGESTELLTEN PRODUKTES

PROCEDE PERMETTANT D'OBTENIR UNE SUSPENSION DE SILICE COLLOIDALE A CONCENTRATION ELEVEE ET PRODUIT AINSI OBTENU

(84) Designated Contracting States:
**AT BE CH DE DK ES FI FR GB IT LI NL PT SE**
Designated Extension States:
**RO SI**

(30) Priority: **01.07.1997 IT RM970391**

(43) Date of publication of application:
**03.05.2000 Bulletin 2000/18**

(73) Proprietor: **Grace GmbH & Co. KG**
**67545 Worms (DE)**

(72) Inventor: **TODARELLO, Francesco**
**I-00040 Ciampino (IT)**

(74) Representative: **Gervasi, Gemma, Dr. et al**
**NOTARBARTOLO & GERVASI**
**Corso di Porta Vittoria, 9**
**20122 Milano (IT)**

(56) References cited:
**EP-A- 0 464 289      EP-A- 0 537 375**
**EP-A- 0 569 813      WO-A-91/07351**
**FR-A- 2 342 036      GB-A- 1 181 296**
**US-A- 2 750 345      US-A- 2 833 724**
**US-A- 3 582 494      US-A- 4 915 870**

• **DATABASE WPI Section Ch, Week 8731 Derwent Publications Ltd., London, GB; Class A97, AN 87-218218 XP002085585 & JP 62 144848 A (ASAHI DENKA KOGYO KK) , 29 June 1987**

## EP 0 996 588 B1

**Description**

**Field of the invention**

The present invention refers to a process to obtain a colloidal silica suspension in a high concentration, in particular in a concentration above the corresponding gel point. The invention also refers to the product thus obtained.

**Prior art**

Suspensions based on $SiO_2$, containing silica with dimensions in the order of nanometres and having alkaline pH, also called basic sol, and acid suspensions, called acid sol, are already known and find application, e.g., as bonding agents to be used at high temperatures in precision casting.

Suspensions of this type, obtained by conventional methods, are described in GB patent 1,348,705. The production process disclosed therein is based on an ultrafiltration step to be accurately monitored, especially with regard to the salts content, to prevent the occurrence of irreversible gel formation.

US patent 5,458,812 describes a process to obtain colloidal silica based on the use of three reactors in series. In this case too, the final suspension is concentrated by ultrafiltration.

Both aforementioned methods allow to produce colloidal silica suspensions with dispersed particles size in the order of some tens of nanometres. In fact, in said processes, at a given average size of the water-dispersed silica particles, there is a limit concentration value, called gel point, below which gelling phenomena take place spontaneously with aggregation of the silica particles. Said well known values (R.K. Iler, The Chemistry of Silica, John Wiley & Sons, NY), provide evidence that the smaller the particle size, the lower is the concentration at which the particles gel spontaneously. The values, at a pH of approx. 9.5, are reported below:

| Average particle size | Gel point | Specific surface |
|---|---|---|
| (nm) | (% by wt.) | $m^2/g$ |
| 5 | 8-20 | 550 |
| 7 | 33-36 | 392 |
| 12 | 45-50 | 229 |
| 22 | 55-60 | 125 |

Said particle size generally corresponds to the indicated specific surface ranges, obtained by applying the following formula:

$$\text{Specific Surface } (m^2/g) = 2750 \text{ / particle diameter (nm)}$$

(reference quoted)

Therefore, having set the particle size, it is impossible to obtain concentrations above the corresponding gel point.

Specific operational conditions overcoming the deficiencies of the prior art have now been found.

**Summary**

It is, therefore, an object of the present invention to provide a process to obtain a sol based on colloidal silica in a concentration above the corresponding gel point.

Another object of the invention resides in an alkaline suspension based on colloidal silica having a silica content above the corresponding gel point.

A further object of the invention resides in the use of alkaline suspensions based on colloidal silica, having a silica content above the corresponding gel point, as bonding agents in precision casting.

Still further objects of the invention will become evident from the detailed description of the invention.

**Detailed description of the invention**

Unless otherwise specified, in the present description, all % are expressed as % by weight.

The stable starting suspension, which may be used in the process according to the invention, is obtained by causing an aqueous solution of an alkaline metal silicate, e.g. sodium silicate in an $SiO_2/Na_2O$ ratio equal to approx. 3.36:1 (solution containing approx. 5-6% by wt. $SiO_2$), to pass, at room temperature, through a strong cationic ion exchange column, e.g. RELITE® CF available from Resindion, to give unstable silicic acid (acid sol) at a final pH of 2 to 3.5.

Acid sol is stabilized at room temperature as follows. The solution is vigorously stirred and rapidly added with an alkaline silicate, abruptly to bring the pH value, initially of approx. 2, to a final value of 9 to 11.

For example, approx. 10 $m^3$ of acid sol may be added with approx. 800 l of a 20-30% by wt. sodium silicate solution, to bring alkalinity of the former acid sol to approx. 140-160 meq/l alkalinity.

Purpose of such a rapid alkalis addition is to leave the critical pH zone as rapidly as possible, where spontaneous gel formation phenomena tend to occur.

The stabilized suspension is fed to appropriate evaporators and heated. Said concentration is carried out at boiling, at a temperature ranging from about 90° to about 98°C, preferably of approx. 95°C, under vacuum, until obtaining a final concentration $SiO_2$ of approx. 5-15% by wt., preferably of approx. 6% by wt., a pH ranging between 9 and 10 and particle size below 10 nm., preferably in the range of 2 to 5 nm.

When the desired concentration is obtained, the suspension is subjected to cold ultrafiltration by causing said suspension to cool from the boiling temperature to room temperature as rapidly as possible, e.g. by appropriate heat exchangers. To get an idea of the time taken for said operation of cooling, note that the temperature decreases to 15-30°C within a couple of hours.

For ultrafiltration, membranes known to those expert in the art, e.g. flat or spiral membranes with a cut of 10,000 to 30,000 dalton, may be conveniently used.

Since the suspension tends to heat when passing through the membrane, it is advisable to control the temperature, which shall not exceed 50°C, otherwise the cut will change, i.e. increase.

By carrying out the ultrafiltration as described in the above, the starting suspension will concentrate, while the starting particles diameter will be maintained: (2-5 nm, with specific surface of 500-1000 $m^2/g$). It follows that, once ultrafiltration has been completed, a suspension with silica particles size below 10 nm and with a concentration higher than 50% by wt., preferably higher than 30% by wt., is obtained.

Downstream of ultrafiltration, it is necessary to adjust the content of cations and anions, which have been concentrated by passing through the ultrafiltration membranes. Said ion adjustment step is of some importance; in fact, should it not be adequately performed, it will cause suspension instability and gelling.

Said adjustment may be carried out by techniques known to those expert in the art, e.g. using ion exchange resins.

Within the scope of the present invention, said adjustment is conveniently carried out as follows. An amount of product, preferably 20 to 50% of the total, is caused to pass through a bed of strong cationic resin, e.g. RELITE® CF available from Resindion, which captures sodium. The resulting acid sol is mixed with the remainder of the product. An amount, preferably from 20 to 50% of the total, is withdrawn from the resulting mixture and caused to pass through a bed of weak anionic resin, e.g. RELITE® 4MS available from Resindion. The eluate is mixed with the remainder of the product.

Preferably, the final concentrations of stabilizing ions, compatible with the silica particle size and the concentrations obtained according to the invention, are as follows:

sulphate ions: 20 to 400 mg/l, preferably 100 to 170 mg/l
sodium ions: 0.10 to 0.80% by wt., preferably 0.27 to 0.40% by wt. for a specific surface of 400 to 600 $m^2/g$, preferably 527 to 550 $m^2/g$.

The concentrated solutions of the invention - because of their higher degree of concentration - find more extensive application than the corresponding, less concentrated, solutions. As known, in fact, colloidal silica may be used as a flocculating agent, e.g. in the food industry instead of bentonite, or as an additive for plastic materials and for paper manufacture.

The suspensions of the invention, because of their higher degree of concentration, are particularly effective for white wine and fruit-juice clarification and increase the yield to clarified product.

In the field of plastics for food, the suspensions of the invention, thanks to their wider specific surface, are of great interest being osmoregulators more effective than the products already known.

As concerns paper manufacture, the suspensions of the invention are particularly advantageous as they provide liquid retention.

In particular, the concentrated solutions according to the invention may be advantageously applied to investment casting techniques as low-environmental-impact water-based bonding agents.

The following examples are to be considered illustrative, and not limitative of the scope of the present invention.

### Example 1

Description of colloidal silica production process

Vitreous silicate ($SiO_2$/$Na_2O$ ratio equal to 3.36) was fed to an autoclave at a pressure of 5 to 6 atm with an amount of $H_2O$ adequate to obtain a final silicate concentration of 25% by weight. Said solution, which was turbid because of the presence of clay derived from siliceous sands, was predecanted and then fed to a flocculating tank wherein it was further diluted with water to approx. 20%. The solution was then heated under stirring to a temperature of approx. 70°C, added with low-molecular-weight cationic flocculants, allowed to stir at said temperature for approx. 2 h, and decanted for 48 h. The clarified liquid recovered was further diluted with water to approx. 5%. The resulting diluted solution was caused to pass through a column containing strong cationic resin RELITE® CF to exchange the silicate sodium with the resin hydrogen ion to give unstable colloidal silicic acid (acid sol). An amount of 10 $m^3$ of said acid sol was fed to a tank provided with a stirrer, marine screw propeller type, and stirred vigorously. Alkaline silicate (800 l) was added rapidly to bring the pH value from 2 to approx. 10. The stabilized solution was heated to boiling (95°C) under vacuum until a final $SiO_2$ concentration of approx. 6% by wt. with pH of approx. 9.5 and particle size of 2 to 5 nm. The suspension was cooled from 95°C to room temperature over a couple of hours and subjected to ultrafiltration. Ultrafiltration was carried out with a flat membrane with a cut of 20,000 dalton. Once ultrafiltration had been completed, a suspension with silica particles averagely sized 2.6 nm was obtained.

Downstream of ultrafiltration, the content of cations and anions was adjusted by withdrawing an amount of product equal to 30% of the total, and causing it to pass through a bed of strong cationic resin, RELITE® CF, which captures sodium. The resulting acid sol was mixed with the remainder of the product. An amount equal to 30% of the total was withdrawn from the resulting mixture and caused to pass through a bed of weak anionic resin, RELITE® 4MS. The eluate was mixed with the remainder of the product.

The final product obtained exhibited the following characteristics:

concentration 25% by wt. silica;
surface area 530 $m^2$/g;
particle diameter 2.6 nm.

The product obtained, hereinafter referred to as K, was taken as sample for the successive tests.

### Example 2

Stability test. An amount of sample K, having initial temperature of 20°C, density of 1.14 g/cc, viscosity of 11 sec (Ford cup B4) and pH 10, was maintained at 60°C for 20 days. After said period, equivalent to 200 days at room temperature, the product, at 60°C, had density of 1.13 g/cc, viscosity of 11 sec (Ford cup B4) and pH 10. After 20 further days at 60°C, no significant variation took place, which proved a very high stability.

### Example 3

Manufacture and characterization of ceramic shells for precision castings

Tests were carried out with sample K and with a non-ultrafiltered comparison sample having the following characteristics: density 1.2 kg/$dm^3$, $SiO_2$ 30% by wt., pH 9.5, $Na_2O$ 0.30%, particle diameter 12 nm, specific surface 300 $m^2$/g, $Cl^-$ 50 ppm, $SO_4^{2-}$ 450 ppm, hereinafter referred to as A.

The comparison sample was selected on the basis of the following criterion: the product had to show a specific surface smaller than that of reference, which was of 500 $m^2$/g min., and a higher silica content. In this way, the effect of said two physical data on the mechanical resistance and permeability could be investigated.

The goal was to demonstrate how a reduced silica content (with consequent reduction in the overall product cost), compensated by an increased specific surface, could maintain the mechanical properties (breaking modulus MOR at room temperature and at high temperature) at industrially acceptable standards and increase the permeability properties at room and at high temperature (900°C). Shells were produced according to the following procedure:

- Making wax components by means of a press injecting synthetic material in the liquid state under pressure into a mould.
- Assembling the wax components by welding, to obtain units (clusters) inclusive of the components to be produced, of gates, ceramic connection areas, if any, to be coated with refractory material.
- Coating the clusters with ceramic material through a small number of alternate immersions into baths containing bonding agents and ceramic material and sprinklings with refractory sand.

Said operations allowed the obtainment of a ceramic shell, which was subjected to final drying under controlled humidity and temperature conditions.

- Removing the wax from the ceramic shell by dewaxing in an autoclave at a pressure of 10 atm max.

The shells obtained were called shells K and shells A.

For the purpose of comparison, baths for the manufacture of ceramic shells usable for casting, were prepared with both samples, K and A. The manufacturing cycles varied depending on the intermediate drying times and on the relative conditions (with or without ventilation) according to Table 1.

Table 1

|  | Bonding agent A | Bonding agent K |
|---|---|---|
| 1 h intermediate drying without ventilation | A1 | K1 |
| 1 h intermediate drying with ventilation | A1V | K1V |
| nh intermediate drying without ventilation | An | Kn |
| nh intermediate drying with | AnV | KnV |

Primary and secondary baths, as per Table 2, were prepared for both bonding agents A and K.

Table 2

| Bonding agent | Bonding agents A and K |
|---|---|
| Primary bath flour | Zircosil - 200 mesh |
| Primary bath load/ bonding agent ratio | 4.5 kg/l |
| Antifoam agent | 1% octyl alcohol |
| Wetting agent | 0.5% SYNPERONIC |
| Viscosity (primary bath) | 90" (FORD B4) |
| Secondary bath flour | Molochite - 200 mesh |
| Secondary bath load/ bonding agent ratio | 2 kg/l |
| Viscovity (secondary bath) | 30" (FORD B4) |

Ceramic shells were prepared with the abovesaid baths according to the procedures shown in Table 3. Baking and casting conditions for shells obtained with bonding agents A and K are reported in Table 4. Mechanical tests were performed on the thus obtained shells, the breaking modulus MOR being determined at room temperature and at 900°C. Tests were carried out with a NEITZSCH TESTER 422S apparatus.

Table 3

|  |  | Sprinkling sand |
|---|---|---|
| No. of primary layers | 1 | zircon 80/120 |
| No. of secondary layers | 3<br>3 + finishing | molochite 30/80<br>molochite 30/80 |
| Intermediate drying | 1 to 4 h |  |
| Final drying | 24 h |  |
| Drying conditions | 45%±5% UR<br>21.5±1.5°C<br>with/without ventilation |  |
| Dewaxing in autoclave | 8 atm for 10min |  |

Table 4

|  | shell A | shell K |
|---|---|---|
| Shells cast (identification) | A1(2) and A1V | K1(2) and K1V |
| Test castings | 3 | 3 |
| Preheating conditions | 1150°C 1h | 1150°C 1h |
| Type of alloy | AISI 316 | AISI 316 |
| Casting temperature | 1550°C | 1550°C |
| Remarks | solid casting | solid casting |
| Surface quality | good | good |

Hot temperature tests were carried out according to the following precedure:

- test-pieces dewaxing in autoclave
- baking up to 1000°C with no temperature pause
- low cooling in oven
- test-piece positioning in the apparatus at room temperature
- test-pieces heating inside the apparatus to 900°C
- flexural test at hot temperature

As concerns the tests carried out at room temperature, the values of the breaking modulus of shells obtained with bonding agent A (with or without forced ventilation) are averagely higher than those obtained with bonding agent K. (Table 5 - Values of breaking modulus at room temperature and at 900°C expressed as MPa)

Table 5

| Temperature | room | | | | 900°C | |
|---|---|---|---|---|---|---|
| Intermediate drying time | 1 | 2 | 3 | 4 | 1 | 4 |
| A | 6.63 | 6.86 | 6.56 | 8.57 | 14.65 | 15.20 |
| AV | 6.29 | 7.40 | 6.21 | 7.26 | 14.65 | 14.35 |
| K | 5.12 | 5.86 | 6.15 | 6.77 | 15.05 | 14.45 |
| KV | 5.60 | 5.17 | 5.62 | 5.68 | 13.05 | 14.90 |
| Reference industrial value | 5 | 5 | 5 | 5 | 12 | 12 |

In any case, in both cases the values are higher than 5 MPa, which is regarded, by some industrial foundries, as a minimum reference value.
The heat resistance values (after 1 and 4 hrs of intermediate drying) (Table 5) are comparable with the reference ones, however higher than an industrial value of 12 MPa.
It is to be reminded that the breaking modulus is a measure of the stress the test-piece is subjected to; said measure depends considerably on the shell thickness.
However, a measure of the overall resistance of the shell is given by the tensile strength. (see Table 6 - Tensile strength at room temperature expressed as N).
As may be seen in Table 6, shells K are averagely more resistant than shells A.
The higher resistance, expressed by a higher tensile strength, is strongly correlated with the occurrence of cracks in ceramic shells.

Table 6

| Ventilation times and conditions (hrs) | A | K |
|---|---|---|
| 1 | 31 | 25.8 |
| 1V | 25.4 | 29 |

Table 6   (continued)

| Ventilation times and conditions (hrs) | A | K |
|---|---|---|
| 2 | 31.3 | 41.7 |
| 2V | 32.3 | 28.3 |
| 3 | 32.4 | 35.7 |
| 3V | 23.8 | 28 |
| 4 | 37.5 | 49 |
| 4V | 28.3 | 28.5 |

Permeability tests at room temperature and at 900°C were conducted on the shells obtained. Tests were carried out according to ICI 775-83 standard.

Permeability tests are usually carried out to predict the behaviour of shells during dewaxing and to know their filling characteristics. A good permeability at room temperature is correlated with good shell performance during dewaxing (absence of cracks); instead, at a high temperature it is indicative of alloy filling inside the ceramic moulds.

The comparison of the tests conducted on samples A and K evidences that, at room temperature, the two products exhibit almost the same characteristics, whereas at a high temperature (900°C), the products of the invention are decidely better. (see Table 7 - Permeability tests at room temperature and at 900°C expressed as $m^2$).

Table 7

| Test-piece | Permeability at room T ($10^{-5}$) | Permeability at 900°C ($10^{-5}$) |
|---|---|---|
| A3/1 | 84.9 | 6.29 |
| A3/2 | 83.5 | 6.96 |
| A3/3 | 92.7 | 6.55 |
| A3/4 | 99.3 | 7.55 |
| A2V/1 | 103 | 10.4 |
| A2V/2 | 96.4 | 6.82 |
| A2V/3 | 88.2 | 6.24 |
| A2V/4 | 94.6 | 6.39 |
| A2V/5 | 103 | 8.79 |
| K3/1 | 178 | 20.6 |
| K3/2 | 204 | 28.8 |
| K3/3 | 188 | 25.5 |
| K3/4 | 197 | 25.5 |
| K3/5 | 200 | 29.1 |
| K2V/1 | 169 | 28.1 |
| K2V/2 | 171 | 24.8 |
| K2V/3 | 184 | 26.2 |
| K2V/4 | 185 | 26.2 |
| K2V/5 | 164 | 20.6 |

**Claims**

1.   Process to obtain a colloidal silica suspension in a concentration above its gel point consisting in the steps of:

- preparing a stable suspension by causing an aqueous solution of an alkaline metal silicate to pass, at room temperature, through a strong cationic ion exchange column to obtain unstable silicic acid at a final pH of 2 to 3.5;

- stabilizing the acid sol at room temperature by vigorous stirring and rapidly adding an alkaline silicate, abruptly to bring the pH final value to 9-11;
- feeding the stabilized suspension to evaporators and concentrate said suspension at a temperature ranging from approx. 90° to 98°C under vacuum until obtaining a final concentration of $SiO_2$ of approx. 5 to 15% by wt., the pH ranging from 9 to 10, and the particle size being lower than 10 nm;
- subjecting the suspension to cold ultrafiltration, wherein said suspension is cooled from boiling temperature to room temperature or below as rapidly as possible;
- subjecting the thus obtained suspension to a stabilization step to adjust the content of cations and anions to be compatible with the silica particle size and concentration of the silica suspension.

2. The process as claimed in claim 1, wherein the silicate is sodium silicate in an $SiO_2/Na_2O$ ratio equal to approx. 3.36:1.

3. The process as claimed in claim 1, wherein, in the ultrafiltration step, cooling is conducted over two hours.

4. The process as claimed in claim 1, wherein, in the ultrafiltration step, cooling is conducted until a temperature of 15 to 30°C.

5. The process as claimed in claim 1, wherein ultrafiltration is carried out on membranes with a cut of 10,000 to 30,000 dalton.

6. The process as claimed in any of claims 1 to 5, wherein, in the ultrafiltration step, the temperature is controlled to maintain it below 50°C.

7. The process as claimed in any of claims 1 to 6, wherein the stabilization step is carried out as follows: a suspension amount equal to 20 to 50% of the total, is caused to pass through a bed of strong cationic resin, which captures sodium; the resulting acid sol is mixed with the remainder of the product; then, an amount ranging from 20 to 50% of the total, is withdrawn from the mixture obtained and caused to pass through a bed of weak anionic resin, mixing the eluate with the remainder of the product.

8. The process as claimed in claim 7, wherein the final concentrations of the stabilizing ions compatible with the particle size and silica concentrations are as follows: sulphate ions: 20 to 400 mg/l, sodium ions: 0.10 to 0.80% by wt., for a specific surface of 480 to 600 $m^2/g$.

9. The process as claimed in claim 7, wherein the final concentrations of the stabilizing ions compatible with the particle size and silica concentrations obtained according to the invention are as follows: sulphate ions: 100 to 170 mg/l, sodium ions: 0.27 to 0.40% by wt., for a specific surface of 527 to 550 $m^2/g$.

10. A colloidal silica alkaline suspension obtained according to the process claimed in claims 1-9 and **characterized by** having a concentration above its gel point and including silica particles having dimensions lower than 10 nm and a concentration higher than 50% by wt.

11. A colloidal silica alkaline suspension obtained according to the process claimed in claims 1-9 and **characterized by** a concentration above its gel point and including silica particles having dimensions lower than 10 nm and a concentration higher than 30% by wt.

12. Use of the suspension as claimed in any of claims 10 and 11 as a flocculant.

13. Use of the suspension as claimed in any of claims 10 and 11 as a flocculant for food.

14. Use of the suspension as claimed in any of claims 10 and 11 as an additive for plastics for food.

15. Use of the suspension as claimed in any of claims 10 and 11 as an additive for paper manufacture.

16. Investment castings obtained starting from the suspension as claimed in any of the claims 10 and 11 and **characterised by** permeability at 900°C $\geq 20.6 \times 10^{-5}$ $m^2$.

**Patentansprüche**

1. Verfahren zur Herstellung einer kolloidalen Kieselsäure-Suspension in einer Konzentration oberhalb ihres Gelpunktes, bestehend aus den Schritten:

   - Herstellen einer stabilen Suspension, indem man eine wäßrige Lösung eines alkalischen Metallsilikats bei Raumtemperatur durch eine stark kationische Ionenaustauschsäule hindurchlaufen läßt, um instabile Kieselsäure zu erhalten, bei einem End-pH von 2 bis 3,5;

   - Stabilisieren des sauren Sols bei Raumtemperatur durch kräftiges Rühren und schnelle Zugabe eines alkalischen Silikats, um den pH-Endwert sprunghaft auf 9-11 zu bringen;

   - Zuführen der stabilisierten Suspension zu Verdampfern und Konzentrieren besagter Suspension bei einer Temperatur von ungefähr 90° bis 98°C unter Vakuum bis zum Erreichen einer Endkonzentration von $SiO_2$ von ungefähr 5 bis 15 Gew.-%, wobei der pH im Bereich von 9 bis 10 liegt und die Teilchengröße kleiner als 10 nm ist;

   - Unterwerfen der Suspension unter kalte Ultrafiltration, wobei besagte Suspension von Siedetemperatur auf Raumtemperatur oder darunter so schnell wie möglich abgekühlt wird;

   - Unterwerfen der so erhaltenen Suspension unter einen Stabilisierungsschritt, um den Gehalt an Kationen und Anionen so einzustellen, daß er kompatibel ist mit der Kieselsäure-Teilchengröße und Konzentration der Kieselsäure-Suspension.

2. Verfahren nach Anspruch 1, **dadurch gekennzeichnet, daß** das Silikat Natriumsilikat ist, in einem $SiO_2/Na_2O$-Verhältnis, das ungefähr 3,36:1 entspricht.

3. Verfahren nach Anspruch 1, **dadurch gekennzeichnet, daß** im Ultrafiltrationsschritt das Abkühlen über zwei Stunden durchgeführt wird.

4. Verfahren nach Anspruch 1, **dadurch gekennzeichnet, daß** im Ultrafiltrationsschritt das Abkühlen bis zu einer Temperatur von 15 bis 30°C durchgeführt wird.

5. Verfahren nach Anspruch 1, **dadurch gekennzeichnet, daß** Ultrafiltration auf Membranen mit einem Schnitt von 10.000 bis 30.000 Dalton durchgeführt wird.

6. Verfahren nach einem der Ansprüche 1 bis 5, **dadurch gekennzeichnet, daß** im Ultrafiltrationsschritt die Temperatur so gesteuert wird, daß sie unterhalb 50°C gehalten wird.

7. Verfahren nach einem der Ansprüche 1 bis 6, **dadurch gekennzeichnet, daß** der Stabilisierungsschritt wie folgt durchgeführt wird: man läßt eine Suspensionsmenge, die 20 bis 50 % der Gesamtmenge entspricht, durch ein Bett aus stark kationischem Harz, das Natrium abfängt, hindurchlaufen; das resultierende saure Sol wird mit dem Rest des Produktes vermischt; anschließend wird eine Menge im Bereich von 20 bis 50 % der Gesamtmenge von der erhaltenen Mischung abgenommen und man läßt diese durch ein Bett aus schwach anionischem Harz hindurchlaufen, wobei das Eluat mit dem Rest des Produktes vermischt wird.

8. Verfahren nach Anspruch 7, **dadurch gekennzeichnet, daß** die Endkonzentrationen der stabilisierenden Ionen, die mit der Teilchengröße und den Kieselsäure-Konzentrationen sind, wie folgt kompatibel sind: Sulfat-Ionen: 20 bis 400 mg/l, Natrium-Ionen: 0,10 bis 0,80 Gew.-%, für eine spezifische Oberfläche von 480 bis 600 $m^2$/g.

9. Verfahren nach Anspruch 7, **dadurch gekennzeichnet, daß** die Endkonzentrationen der stabilisierenden Ionen, die mit der Teilchengröße und den Kieselsäure-Konzentrationen kompatibel sind, die gemäß der Erfindung erhalten werden, wie folgt sind: Sulfat-Ionen 100 bis 170 mg/l, Natrium-Ionen: 0,27 bis 0,40 Gew.-%, für eine spezifische Oberfläche von 527 bis 550 $m^2$/g.

10. Alkalische kolloidale Kieselsäure-Suspension, erhalten gemäß dem Verfahren, das in den Ansprüchen 1-9 beansprucht ist, und **dadurch gekennzeichnet, daß** sie eine Konzentration oberhalb ihres Gelpunktes aufweist und Kieselsäure-Teilchen mit Abmessungen von weniger als 10 nm und einer Konzentration von mehr als 50 Gew.-%

einschließt.

11. Alkalische kolloidale Kieselsäure-Suspension, erhalten gemäß dem Verfahren, das in den Ansprüchen 1-9 beansprucht ist, und **gekennzeichnet durch** eine Konzentration oberhalb ihres Gelpunktes und Kieselsäure-Teilchen mit Abmessungen von weniger als 10 nm und einer Konzentration von mehr als 30 Gew.-% einschließend.

12. Verwendung der Suspension nach einem der Ansprüche 10 und 11 als ein Flockungsmittel.

13. Verwendung der Suspension nach einem der Ansprüche 10 und 11 als ein Flockungsmittel für Lebensmittel.

14. Verwendung der Suspension nach einem der Ansprüche 10 und 11 als ein Additiv für Kunststoffe für Lebensmittel.

15. Verwendung der Suspension nach einem der Ansprüche 10 und 11 als ein Additiv für die Papierherstellung.

16. Investmentgußteile, erhalten ausgehend von der Suspension nach einem der Ansprüche 10 und 11 und **gekennzeichnet durch** eine Durchlässigkeit bei 900°C von $\geq 20{,}6 \times 10^{-5}$ m$^2$.

**Revendications**

1. Procédé pour obtenir une suspension de silice colloïdale à une concentration supérieure à son point de gélification comportant les étapes consistant à :

   - préparer une suspension stable en faisant passer une solution aqueuse d'un silicate de métal alcalin, à température ambiante, à travers une colonne échangeuse d'ions cationique forte pour obtenir un acide silicique instable à un pH final de 2 à 3,5 ;
   - stabiliser le sol acide à température ambiante par agitation vigoureuse et ajout rapide d'un silicate alcalin, brusquement pour amener la valeur finale du pH à 9-11 ;
   - alimenter la suspension stabilisée dans des évaporateurs et concentrer ladite suspension à une température comprise entre env. 90 et 98°C sous vide jusqu'à l'obtention d'une concentration finale de SiO$_2$ d'env. 5 à 15 % en poids, le pH étant compris entre 9 et 10, et la granulométrie étant inférieure a 10 nm ;
   - soumettre la suspension à une ultrafiltration à froid, ladite suspension étant refroidie de la température d'ébullition à la température ambiante ou en dessous aussi rapidement que possible ;
   - soumettre la suspension ainsi obtenue à une étape de stabilisation pour ajuster la teneur en cations et en anions de façon qu'elle soit compatible avec la granulométrie de la silice et la concentration de la suspension de silice.

2. Procédé selon la revendication 1, dans lequel le silicate est le silicate de sodium dans un rapport SiO$_2$/Na$_2$O égal à env. 3,36:1.

3. Procédé selon la revendication 1, dans lequel, dans l'étape d'ultrafiltration, le refroidissement est effectué sur une période de deux heures.

4. Procédé selon la revendication 1, dans lequel, dans l'étape d'ultrafiltration, le refroidissement est effectué jusqu'à une température de 15 à 30°C.

5. Procédé selon la revendication 1, dans lequel l'ultrafiltration est effectuée sur des membranes avec une limite d'exclusion de 10 000 à 30 000 daltons.

6. Procédé selon l'une quelconque des revendications 1 à 5, dans lequel, dans l'étape d'ultrafiltration, on régule la température pour la maintenir en dessous de 50°C.

7. Procédé selon l'une quelconque des revendications 1 à 6, dans lequel l'étape de stabilisation est effectuée de la façon suivante : on fait passer une quantité de suspension égale à 20 à 50 % du total sur un lit de résine cationique forte, qui capture le sodium ; le sol acide résultant est mélangé avec le reste du preduit ; ensuite, on retire du mélange obtenu une quantité allant de 20 à 50 % du total, et on la fait passer sur un lit de résine anionique faible, en mélangeant l'éluat avec le reste du produit.

**8.** Procédé selon la revendication 7, dans lequel les concentrations finales des ions stabilisateurs compatibles avec la granulométrie et les concentrations de silice sont les suivantes : ions sulfate ; 20 à 400 mg/l, ions sodium : 0,10 à 0,80 % en poids, pour une aire spécifique de 480 à 600 $m^2$/g.

**9.** Procédé selon la revendication 7, dans lequel les concentrations finales des ions stabilisateurs compatibles avec la granulométrie et les concentrations de silice obtenues selon l'invention sont les suivantes : ions sulfate : 100 à 170 mg/l, ions sodium : 0,27 à 0,40 % en poids, pour une aire spécifique de 527 à 550 $m^2$/g.

**10.** Suspension alcaline de silice colloïdale obtenue selon le procédé revendiqué dans les revendications 1 à 9 et **caractérisée par** le fait d'avoir une concentration supérieure à son point de gélification et d'inclure des particules de silice ayant des dimensions inférieures à 10 nm et une concentration supérieure à 50 % en poids.

**11.** Suspension alcaline de silice colloïdale obtenue selon le procédé revendiqué dans les revendications 1 à 9 et **caractérisée par** une concentration supérieure à son point de gélification et incluant des particules de silice ayant des dimensions inférieures à 10 nm et une concentration supérieure à 30 % en poids.

**12.** Utilisation de la suspension selon l'une quelconque des revendications 10 et 11 comme floculant.

**13.** Utilisation de la suspension selon l'une quelconque des revendications 10 et 11 comme floculant pour les aliments.

**14.** Utilisation de la suspension selon l'une quelconque des revendications 10 et 11 comme additif pour les plastiques destinés aux aliments.

**15.** Utilisation de la suspension selon l'une quelconque des revendications 10 et 11 comme additif pour la fabrication du papier.

**16.** Pièces coulées à modèles perdus obtenues en partant de la suspension selon l'une quelconque des revendications 10 et 11 et **caractérisées par** une perméabilité à 900°C $\geq$ 20,6 x $10^{-5}$ $m^2$.